(19) **Europäisches Patentamt**
**European Patent Office**
**Office européen des brevets**

(11) **EP 2 660 623 B1**

(12) **EUROPEAN PATENT SPECIFICATION**

(45) Date of publication and mention
of the grant of the patent:
**03.02.2016 Bulletin 2016/05**

(51) Int Cl.:
***G01S 13/90*** *(2006.01)* ***G01S 13/00*** *(2006.01)*

(21) Application number: **13182443.5**

(22) Date of filing: **30.08.2013**

(54) **Imaging method and device in SAB mobile bistatic SAR**

Bildgebungsverfahren und -Vorrichtung in mobilem, bistatischem SAB-SAR

Procédé et dispositif d'imagerie dans un SAR bistatique mobile SAB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2012 CN 201210322645**

(43) Date of publication of application:
**06.11.2013 Bulletin 2013/45**

(73) Proprietor: **Institute of Electronics, Chinese
Academy of
Sciences
Haidian District Beijing (CN)**

(72) Inventors:
• **Wang, Yu**
**100190 Haidian District Beijing (CN)**
• **Deng, Yun-kai**
**100190 Haidian District Beijing (CN)**
• **Zhao, Feng-jun**
**100190 Haidian District Beijing (CN)**
• **Ni, Jiang**
**100190 Haidian District Beijing (CN)**
• **Jia, Xiao-Xue**
**100190 Haidian District Beijing (CN)**
• **Feng, Jin**
**100190 Haidian District Beijing (CN)**
• **Liu, Yue**
**100190 Haidian District Beijing (CN)**

(74) Representative: **Gulde & Partner
Patent- und Rechtsanwaltskanzlei mbB
Wallstraße 58/59
10179 Berlin (DE)**

(56) References cited:
**US-A- 5 675 550**

• **ENDER J H G ET AL: "New aspects of bistatic
SAR: processing and experiments",
GEOSCIENCE AND REMOTE SENSING
SYMPOSIUM, 2004. IGARSS '04.
PROCEEDINGS . 2004 IEEE INTERNATIONAL
ANCHORAGE, AK, USA 20-24 SEPT. 2004,
PISCATAWAY, NJ, USA,IEEE, vol. 3, 20
September 2004 (2004-09-20), pages 1758-1762,
XP010751953, ISBN: 978-0-7803-8742-3**
• **ENDER J H G ED - INSTITUTE OF ELECTRICAL
AND ELECTRONICS ENGINEERS: "Signal
theoretical aspects of bistatic SAR", LEARNING
FROM EARTH'S SHAPES AND SIZES : IGARSS
2003 ; 2003 IEEE INTERNATIONAL GEOSCIENCE
AND REMOTE SYMPOSIUM ; CENTRE DE
CONGRÈS PIERRE BAUDIS, TOULOUSE,
FRANCE, 21 - 25 JULY 2003 ; PROCEEDINGS;
[IEEE INTERNATIONAL GEOSCIENCE AND
REMOTE SENSING SYM, vol. 3, 21 July 2003
(2003-07-21), pages 1438-1441, XP010704716,
DOI: 10.1109/IGARSS.2003.1294137 ISBN:
978-0-7803-7929-9**
• **CHENG HU ET AL: "Forward-Looking Bistatic
SAR Range Migration Algorithm", RADAR 2006 :
PROCEEDINGS OF 2006 CIE INTERNATIONAL
CONFERENCE ON RADAR ; OCT. 16 - 19, 2006,
SHANGHAI, CHINA, IEEE OPERATIONS
CENTER, PISCATAWAY, NJ, 1 October 2006
(2006-10-01), pages 1-4, XP031073662, ISBN:
978-0-7803-9582-4**

- LOFFELD O ET AL: "Models and Useful Relations for Bistatic SAR Processing", IEEE TRANSACTIONS ON GEOSCIENCE AND REMOTE SENSING, IEEE SERVICE CENTER, PISCATAWAY, NJ, US, vol. 42, no. 10, 1 October 2004 (2004-10-01), pages 2031-2038, XP011120430, ISSN: 0196-2892, DOI: 10.1109/TGRS.2004.835295
- GIROUX V ET AL: "An Omega-K algorithm for SAR bistatic systems", GEOSCIENCE AND REMOTE SENSING SYMPOSIUM, 2005. IGARSS '05. PROCEEDINGS . 2005 IEEE INTERNATIONAL SEOUL, KOREA 25-29 JULY 2005, PISCATAWAY, NJ, USA, IEEE, vol. 2, 25 July 2005 (2005-07-25), pages 1060-1063, XP010848395, DOI: 10.1109/IGARSS.2005.1525297 ISBN: 978-0-7803-9050-8
- I. WALTERSCHEID ET AL: "Bistatic SAR Processing and Experiments", IEEE TRANSACTIONS ON GEOSCIENCE AND REMOTE SENSING, vol. 44, no. 10, 1 October 2006 (2006-10-01), pages 2710-2717, XP055091998, ISSN: 0196-2892, DOI: 10.1109/TGRS. 2006.881848
- JUNJIE WU ET AL: "Range Migration Algorithm in Bistatic SAR Based on Squint Mode", RADAR CONFERENCE, 2007 IEEE, IEEE, PI, 1 April 2007 (2007-04-01), pages 579-584, XP031180971, ISBN: 978-1-4244-0283-0
- XIA BAI ET AL: "<title>Bistatic spaceborne SAR data processing based on LBF</title>", PROCEEDINGS OF SPIE, vol. 6795, 10 November 2007 (2007-11-10), pages 679523-679523-6, XP055092000, ISSN: 0277-786X, DOI: 10.1117/12.773999
- MEHRDAD SOUMEKH: "BISTATIC SYNTHETIC APERTURE RADAR INVERSION WITH APPLICATION IN DYNAMIC OBJECT IMAGING", IEEE TRANSACTIONS ON SIGNAL PROCESSING, IEEE SERVICE CENTER, NEW YORK, NY, US, vol. 39, no. 9, 1 September 1991 (1991-09-01), pages 2044-2055, XP000262930, ISSN: 1053-587X, DOI: 10.1109/78.134436
- JINSHAN DING ET AL: "Focusing bistatic SAR data in the wavenumber domain using linearized weighted LBF", RADAR CONFERENCE, 2009 IEEE, IEEE, PISCATAWAY, NJ, USA, 4 May 2009 (2009-05-04), pages 1-6, XP031461572, DOI: 10.1109/RADAR.2009.4977059 ISBN: 978-1-4244-2870-0

**Description**

**TECHNICAL FIELD**

The disclosure relates to the field of microwave remote sensing and monitoring, and in particular to an imaging method and device in a satellite-or-aircraft-borne (SAB) mobile bistatic Synthetic Aperture Radar (SAR).

**BACKGROUND**

An SAB mobile bistatic SAR is a device in which a transmitter and a receiver of the radar are installed on different carrier platforms to enhance the imaging ability, anti-interference ability, reliability, and flexibility of the system during design and operation.

At present, an imaging method in an SAB mobile bistatic SAR includes: a received echo signal is transformed into a two-dimensional frequency domain, the two-dimensional frequency domain echo data is processed, and the processed echo signal is inverse-transformed into a time domain to obtain an image. In the aforementioned imaging method, the processing the two-dimensional frequency domain echo data includes: eliminating a radial phase in the two-dimensional frequency domain echo data according to the shortest slant range from a scene center to a carrier platform navigation track, namely, a reference slant range. However, the distance from which the echo data of a target are received differs at different locations during navigation; if the echo data are processed using the same reference slant range, a dependence of the target on the slant range cannot be countervailed, thereby leading to insufficient imaging accuracy.

It may be seen that the imaging method in the SAB mobile bistatic SAR in the related art does not process the echo data using different reference slant ranges according to different distances from which the echo data of the target are received at different locations during navigation, therefore fails to countervail the dependence of the target on the slant range, thereby leading to insufficient imaging accuracy.

Joachim Ender et al.: "New aspects of bistatic SAR: processing and experiments" deals with processing and experiments of bistatic SAR data to generate high resolution bistatic SAR images.

US5675550A discloses a system for radiation imaging of objects within a target area utilizing echo signals from a target area such as a patch of seafloor or the anatomy of a body. Data is obtained by time domain measurements received at a plurality of transducers in either monostatic or bistatic mode. Using multidimensional interferometry and multidimensional Fourier transforms, the data is reconstructed in multiple temporal and spatial frequency domains with a unique reduced wavenumber characteristic that retains the resolution potential of a traditional synthetic aperture approach. The system is inherently robust in applications with significant transceiver motion and/or variations in the propagation characteristics of the surrounding medium.

Joachim Ender: "Signal theoretical aspects of bistatic SAR" deals with two techniques that are locally optimum either for short apertures or for small scenes and turns special attention to the transfer of range-migration type algorithms to the bistatic case.

Cheng Hu et al.: "Forward-Looking Bistatic SAR Range Migration Algorithm" deals with a forward-looking bistatic SAR range migration algorithm, wherein according to the geometry configuration of FL-BSAR, in each pulse repetition interval, the slant range was compensated precisely, then through the coordinate rotation, the FL-BSAR is transformed into the equivalent squinted SAR. Using the principal of stationary phase (PSP), the data is transformed into the frequency domain the range migration imaging algorithm (RMA) can be used.

Otmar Loffeld et al.: "Models and Useful Relations for Bistatic SAR Processing" derives a vectorial model for expressing transmitter and receiver trajectories for arbitrary transmitter and receiver motion (nonidentical velocity vectors) in a bistatic synthetic aperture radar constellation. The point target response is first modeled in the space-time domain and then transformed to the frequency domain by the method of stationary phase giving the point target reference spectrum. In the reference spectrum, two phasor functions can be identified, the first one resembling some quasi-monostatic contribution and the second one being a bistatic deformation phasor transforming into an elliptic arc in the spatial domain. The multiplication of the two phasors in the frequency domain transforms into a convolution like operation in the space-time domain, indicating that the bistatic dataset can be expressed as a convolution like (range and azimuth variant) mapping of a monostatic dataset.

**SUMMARY**

In view of this, the main purpose of the disclosure is to provide an imaging method and device in an SAB mobile bistatic SAR capable of countervailing the dependence of a target on a slant range, thereby enabling better imaging accuracy.

To achieve this purpose, the technical solution of the disclosure is implemented as follow.

The disclosure provides an imaging method in an SAB mobile bistatic SAR, which includes:

performing a two-dimensional Fourier transformation on a received echo signal to obtain a two-dimensional frequency domain echo signal;

correcting a radial phase of each range gate in the two-dimensional frequency domain echo signal using a radial-variable-slant-range frequency domain filter function;

performing an orientation scaling Fourier transformation on the two-dimensional frequency domain echo signal with the corrected radial phase to obtain a time domain echo signal; and

using an orientation-variable-slant-range time domain filter function and performing each orientation correction on the time domain echo signal to obtain an image,

wherein the correcting a radial phase in the two-dimensional frequency domain echo signal using a radial-variable-slant-range frequency domain filter function may include: performing a consistent radial modulation on the two-dimensional frequency domain echo signal, and then correcting the radial phase of each range gate in the modulated two-dimensional frequency domain echo signal using the radial-variable-slant-range frequency domain filter function,

wherein the performing each orientation correction on the time domain echo signal to obtain an image may include: multiplying the orientation-variable-slant-range time domain filter function with the time domain echo signal to obtain a corrected image,

wherein the orientation-variable-slant-range time domain filter function may be a time domain filter function established according to a slant range varying with different orientations.

In the aforementioned solution, the performing a consistent radial modulation on the two-dimensional frequency domain echo signal may include: multiplying the two-dimensional frequency domain echo signal with a conjugate function of a two-dimensional frequency domain transmitted signal to obtain the two-dimensional frequency domain echo signal after the consistent radial modulation.

In the aforementioned solution, the radial-variable-slant-range frequency domain filter function may be a frequency domain filter function established according to a slant range varying with each range gate.

The disclosure further provides an imaging device in an SAB mobile bistatic SAR, which includes: a transformation module, a frequency domain filter module, an inverse transformation module, and a time domain filter module, wherein

the transformation module is configured to perform, when an SAB mobile bistatic SAR starts imaging processing, a two-dimensional Fourier transformation on a received echo signal to obtain a two-dimensional frequency domain echo signal, perform the two-dimensional Fourier transformation on the echo signal, and send the obtained two-dimensional frequency domain echo signal to the frequency domain filter module;

the frequency domain filter module is configured to correct a radial phase of each range gate in the two-dimensional frequency domain echo signal sent from the transformation module using a radial-variable-slant-range frequency domain filter function, and send the two-dimensional frequency domain echo signal with the corrected radial phase to the inverse transformation module;

the inverse transformation module is configured to perform an orientation scaling Fourier transformation on the two-dimensional frequency domain echo signal with the corrected radial phase sent from the frequency domain filter module to obtain a time domain echo signal, and send the time domain echo signal to the time domain filter module; and

the time domain filter module is configured to perform each orientation correction on the time domain echo signal sent from the inverse transformation module using an orientation-variable-slant-range time domain filter function to obtain an image,

wherein the frequency domain filter module may be specifically configured to perform a consistent radial modulation on the two-dimensional frequency domain echo signal, and then correct the radial phase of each range gate in the modulated two-dimensional frequency domain echo signal using the radial-variable-slant-range frequency domain filter function, wherein the time domain filter module may be specifically configured to multiply the orientation-variable-slant-range time domain filter function with the time domain echo signal to obtain a corrected image,

wherein the time domain filter module may be specifically configured to take a time domain filter function established according to a slant range varying with different orientations as the orientation-variable-slant-range time domain filter function.

In the aforementioned solution, the frequency domain filter module may be specifically configured to multiply the two-dimensional frequency domain echo signal with a conjugate function of a two-dimensional frequency domain transmitted signal to obtain the two-dimensional frequency domain echo signal after the consistent radial modulation.

In the aforementioned solution, the frequency domain filter module may be specifically configured to take a frequency domain filter function established according to a slant range varying with each range gate as the radial-variable-slant-range frequency domain filter function.

With the imaging method and device in the SAB mobile bistatic SAR provided by the disclosure, it is possible to use the radial-variable-slant-range frequency domain filter function to correct the radial phases corresponding to multiple range gates in the two-dimensional frequency domain echo signal, and then transform the two-dimensional frequency domain echo signal into a time domain echo signal; and use the orientation-variable-slant-range time domain filter function to perform multiple orientation correction on the time domain echo signal to obtain an image. Thus, it is possible to process echo data with different reference slant ranges according to different distances at which the echo data of a target are received at different locations during navigation of a local carrier, and correct the echo signal according to the orientation-variable-slant-range time domain filter function and the radial-variable-slant-range frequency domain filter function established based on the variable slant range from the radial and the orientation points of view, so as to countervail the dependence of the target on the slant range, thereby enabling better imaging accuracy.

## BRIEF DESCRIPTION OF THE DRAWINGS

Fig.1 is a flowchart of an imaging method in an SAB mobile bistatic SAR according to the disclosure; and

Fig.2 is a diagram of the composition and structure of an imaging device in an SAB mobile bistatic SAR according to the disclosure.

## DETAILED DESCRIPTION

The basic idea of the disclosure is that: when an SAB mobile bistatic SAR starts imaging processing, a two-dimensional Fourier transformation is performed on a received echo signal to obtain a two-dimensional frequency domain echo signal; a radial phase of each range gate in the two-dimensional frequency domain echo signal is corrected using a radial-variable-slant-range frequency domain filter function; an orientation scaling Fourier transformation is performed on the two-dimensional frequency domain echo signal with the corrected radial phase to obtain a time domain echo signal; and each orientation correction is performed on the time domain echo signal using an orientation-variable-slant-range time domain filter function to obtain an image.

The disclosure is further elaborated below with reference to the drawings and specific embodiments.

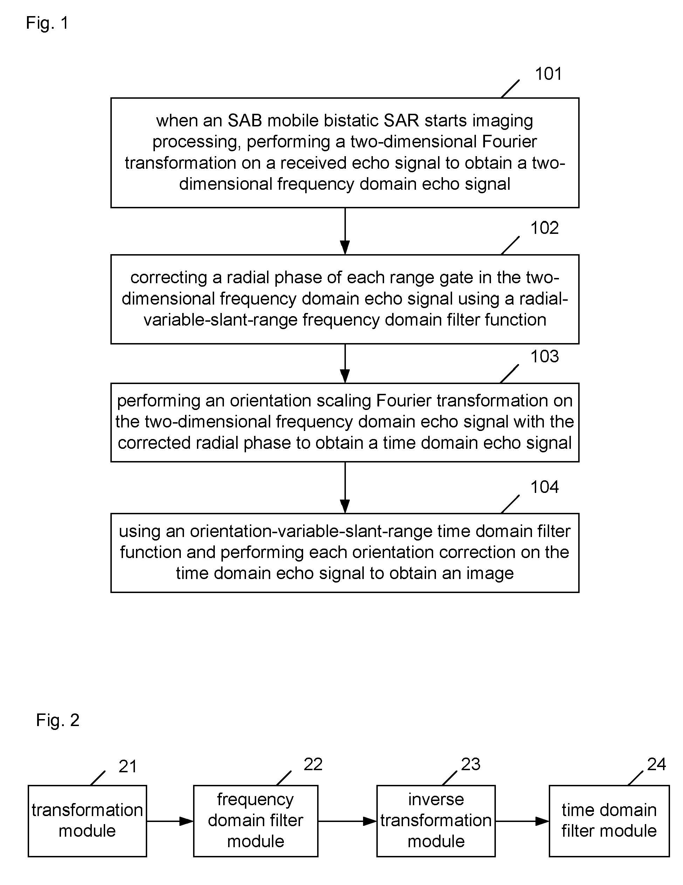

An imaging method in an SAB mobile bistatic SAR proposed by the disclosure, as shown in Fig.1, includes the following steps.

Step 101: when an SAB mobile bistatic SAR starts imaging processing, performing a two-dimensional Fourier transformation on a received echo signal to obtain a two-dimensional frequency domain echo signal.

Here, the SAB mobile bistatic SAR may start the imaging processing by setting an entering-imaging mode according to an actual circumstance, which is not further elaborated here; receiving of the echo signal belongs to the related art of the SAB mobile bistatic SAR, and is not further elaborated here; the two-dimensional Fourier transformation belongs to the related art, and is not further elaborated here.

Wherein, the two-dimensional frequency domain echo signal may be expressed as:

$$G\left(f_\tau, f\right) = W\left(f_\tau\right)W\left(f\right) \times \sigma\left(\tau_{0R}, r_{0R}\right)S_l\left(f\right)\exp\left[-j\Psi_B\left(f_\tau, f\right)\right];$$

Where $W(f_\tau)$ and $W(f)$ are an orientation antenna pattern and a radial antenna pattern, respectively, which are obtained via a related art method not elaborated here; $\sigma(\cdot)$ is a backscattering coefficient of a target point, which is obtained via a related art method not elaborated here; $S_l(f)$ is a two-dimensional frequency domain transmitted signal, the expression of which belongs to the related art, and is not elaborated here; and $\psi_B(f_\tau, f)$ is a distance-dependent phase component of the two-dimensional frequency domain transmitted signal, and may be expressed as:

$$\Psi_B\left(f_\tau, f\right) = \Phi_M\left(f_\tau, f, r_{0R}\right) + 2\pi\beta_A\left(r_{0R}\right)\tau_{0R}f_\tau + \Phi_{Res}\left(\tau_{0R}, r_{0R}\right),$$

wherein

$$\Phi_M \left( f_\tau, f, r_{0R} \right) = 2\pi \left( p_{10} + p_{11} r_{0R} \right) k_T f + 2\pi \left[ \frac{r_{0R}}{c} \sqrt{\left( f + f_\tau \right)^2 - \left( \frac{c f_{\tau R}}{v_R} \right)^2} + \frac{r_{0T}}{c} \sqrt{\left( f + f_\tau \right)^2 - \left( \frac{c f_{\tau T}}{v_T} \right)^2} \right]$$

$$\Phi_{\mathrm{Res}} \left( \tau_{0R}, r_{0R} \right) = 2\pi \left[ f_{DcT} - k_T \left( f_{DcR} + f_{DcT} \right) \right] \times \left( p_{10} + p_{11} r_{0R} + p_{12} \tau_{0R} \right) + 2\pi \left[ f_{DcR} - k_R \left( f_{DcR} + f_{DcT} \right) \right] \tau_{0R}$$

$\beta_A(r_i)$ is an orientation modulation factor depending on the slant range of the target, and is expressed as $\beta_A(r_i) = k_R + p_{12} k_T$;

Where, $\tau_{0R}$ is a Doppler frequency of a receiver, $v_T$ is a platform navigating speed of a transmitter, $v_R$ is the platform navigating speed of the receiver, $\tau_{0T}$ is the Doppler frequency of the transmitter and may be expressed as $\tau_{0T} = p_{10} + p_{11} r_{0R} + p_{12} \tau_{0R}$, $r_{0R}$ is the shortest distance from a point target to a navigation track of the receiver, $r_{0T}$ is the shortest distance from the point target to the navigation track of the transmitter, c is a signal transmitting speed, f is a radial frequency variable, $f_\tau$ is an orientation frequency variable, $T_{CS}$ is an orientation synthetic aperture time, $k_T$ and $k_R$ are Doppler weighting factors of the transmitter and the receiver, respectively, which are expressed as $k_T = \dfrac{v_T^2}{v_T^2 + v_R^2}$,

$k_R = \dfrac{v_R^2}{v_T^2 + v_R^2}$; $L_{CS}$ is an orientation synthetic aperture width, $f_{\tau T}$ is a Doppler frequency of the transmitter, $f_{\tau R}$ is the Doppler frequency of the receiver, $f_{DcT}$ is the Doppler central frequency of the transmitter, $f_{DcR}$ is the Doppler central frequency of the receiver; $K_{aT}$ is an antenna pattern of the transmitter, $K_{aR}$ is an antenna pattern of the receiver, and $T_{CS}$ is orientation synthetic aperture time.

Step 102: correcting a radial phase of each range gate in the two-dimensional frequency domain echo signal using a radial-variable-slant-range frequency domain filter function.

Specifically, a consistent radial modulation is performed on the two-dimensional frequency domain echo signal, and then the radial phase of each range gate in the modulated two-dimensional frequency domain echo signal is corrected using the radial-variable-slant-range frequency domain filter function.

Here, the performing the consistent radial modulation on the two-dimensional frequency domain echo signal includes: multiplying the two-dimensional frequency domain echo signal with a conjugate function of a two-dimensional frequency domain transmitted signal to eliminate the consistent radial modulation in the two-dimensional frequency domain echo signal, and thereby to distinguish echo energy of different range gates, wherein the conjugate function of the two-dimensional frequency domain transmitted signal is calculated via a related art method not elaborated here.

The radial-variable-slant-range frequency domain filter function is a frequency domain filter function established by replacing the slant range in an existing frequency domain filter function with the one varying with each range gate, and may be expressed as:

$$H_M \left( f_\tau, f, r_i \right) = \exp \left\{ j \Phi_M \left( f_\tau, f, r_{0R} = r_i \right) \right\},$$

wherein

$$\Phi_M \left( f_\tau, f, r_{0R} \right) = 2\pi \left[ \frac{r_{0R}}{c} \sqrt{\left( f + f_0 \right)^2 - \left( \frac{c f_{\tau R}}{v_R} \right)^2} + \frac{r_{0T}}{c} \sqrt{\left( f + f_0 \right)^2 - \left( \frac{c f_{\tau T}}{v_T} \right)^2} \right],$$

wherein

$r_i$ represents the shortest slant range of the target located in the ith range gate from the receiver of the SAR, and may be calculated using the following formula:

$$r_{i+1} = r_i + T \bullet \frac{c}{2},$$

where i is an integer greater than or equal to 1; when i=1, $r_i$ is the shortest slant range of a near-ground point target from the receiver of the radar, which is obtained by way of related art not elaborated here; where T is a radial sampling period, c is a signal transmitting speed, $f_{\tau T}$ is the Doppler frequency of the transmitter, $f_{\tau R}$ is the Doppler frequency of the receiver, $v_T$ is the platform navigating speed of the transmitter, $v_R$ is the platform navigating speed of the receiver, $r_{0T}$ is the shortest distance from the point target to the navigation track of the transmitter.

The correcting the radial phase in the modulated two-dimensional frequency domain echo signal using the radial-variable-slant-range frequency domain filter function includes: performing an orientation cumulative calculation along each range gate after multiplying the radial-variable-slant-range frequency domain filter function by the range-compressed two-dimensional frequency domain echo signal, specifically expressed as :

$$G_2\left(f_\tau, t, r_i\right) = \int G_1\left(f_\tau, f\right) \times H_M\left(f_\tau, f, r_i\right) df$$

$$= \rho_r\left(r_{0R} = r_i\right) \times \sum_{\tau_{0R}} \sigma\left(\tau_{0R}, r_i\right) W\left(f_\tau\right) W\left(f\right) \times \exp\left\{-j\left[2\pi\beta_A\left(r_i\right)\tau_{0R}f_\tau + \Phi_{\mathrm{Re}s}\left(\tau_{0R}, r_i\right)\right]\right\};$$

Where, $W(f_\tau)$ and $W(f)$ are the orientation antenna pattern and the radial antenna pattern, respectively, which are obtained via a related art method not elaborated here; f is the radial frequency variable, $f_\tau$ is the orientation frequency variable; $\sigma(\cdot)$ is the backscattering coefficient of the target point obtained by way of related art which is not elaborated here; $r_{0R}$ is the shortest distance of the point target to the navigation track of the receiver, $r_i$ represents the shortest slant range of the target located in the ith range gate from the receiver of the SAR.

Step 103: performing an orientation scaling Fourier transformation on the two-dimensional frequency domain echo signal with the corrected radial phase to obtain a time domain echo signal.

Here, the orientation scaling Fourier transformation is to perform a transformation on the two-dimensional frequency domain echo signal with the radial phase corrected using a variable slant range, specifically expressed as:

$$g_3\left(\tau, t, \tau_{0R}, r_i\right) = \rho_r\left(r_{0R} = r_i\right)\int G_2\left(f_\tau, t, r_i\right)\exp\left[j2\pi\beta_A\left(r_i\right)\tau f_\tau\right]d\left[\beta_A\left(r_i\right)f_\tau\right]$$

$$= \rho_r\left(r_{0R} = r_i\right)\sum_{\tau_{0R}} \mathrm{rect}\left[\frac{v_R\tau_{0R}}{L_{CS}}\right]\mathrm{rect}\left[\frac{v_T\tau_{0T}}{L_{CS}}\right]\sigma\left(\tau_{0R}, r_i\right)p_a\left(\tau - \tau_{0R}\right)\exp\left\{-j\Phi_{\mathrm{Re}s}\left(\tau_{0R}, r_i\right)\right\},$$

where $p_a(\cdot)$ is an orientation sinc function envelope , $\sigma(\cdot)$ is the backscattering coefficient of the target point obtained by way of related art which is not elaborated here; rect[.] is a rectangular pulse expression, belongs to the related art , and is not further elaborated here; $\rho_r(\cdot)$ is a radial sinc function envelope, $v_R$ is the platform navigating speed of the receiver, $\tau_{0R}$ is the Doppler frequency of the receiver, $L_{CS}$ is the orientation synthetic aperture width, $v_T$ is the platform navigating speed of the transmitter, $\tau_{0T}$ is the Doppler frequency of the transmitter, and $f_\tau$ is the orientation frequency variable.

Step 104: using an orientation-variable-slant-range time domain filter function and performing each orientation correction on the time domain echo signal to obtain an image.

Here, the orientation-variable-slant-range time domain filter function is a time domain filter function established according to a slant range varying with different orientations, and may be expressed as: $\exp\{j\Phi_{\mathrm{Res}}(\tau_{0R}, r_i)\}$, wherein $\Phi_{\mathrm{Res}}(\tau_{0R}, r_i) = 2\pi[f_{DcT} - k_T(f_{DcR} + f_{DcT})]\times(p_{10} + p_{11}r_i + p_{12}\tau_{0R}) + 2\pi[f_{DcR} - k_R(f_{DcR} + f_{DcT})]\tau_{0R}$, where $\tau_{0R}$ is the Doppler frequency of the receiver, $v_T$ is the platform navigating speed of the transmitter, $v_R$ is the platform navigating speed of the receiver, $p_{10} + p_{11}r_i + p_{12}\tau_{0R}$ is the Doppler frequency of the transmitter, $r_i$ represents the shortest slant range of the target located in the ith range gate from the receiver of the SAR, and may be calculated using the following formula:

7

$$r_{i+1} = r_i + T \bullet \frac{c}{2},$$ where i is an integer greater than or equal to 1, when i=1, $r_1$ is the shortest slant range of the near-ground point target from the receiver of the radar, which is obtained by way of related art not elaborated here, T is the radial sampling period, c is the signal transmitting speed, $f_{DcT}$ is the Doppler central frequency of the transmitter, $f_{DcR}$ is the Doppler central frequency of the receiver, and $k_T$ and $k_R$ are the Doppler weighting factors of the transmitter and the receiver, expressed as $k_T = \dfrac{v_T{}^2}{v_T{}^2 + v_R{}^2}$ and $k_R = \dfrac{v_R{}^2}{v_T{}^2 + v_R{}^2}$, respectively.

The image may be calculated using the following formula:

$$g_4\left(\tau, t, \tau_{0R}, r_i\right) = g_3\left(\tau, t, \tau_{0R}, r_i\right)\exp\left\{j\Phi_{\mathrm{Res}}\left(\tau_{0R}, r_i\right)\right\}$$

$$= \rho_r\left(r_{0R} = r_i\right)\sum_{\tau_{0R}}\mathrm{rect}\left[\frac{v_R\tau_{0R}}{L_{CS}}\right]\mathrm{rect}\left[\frac{v_T\tau_{0T}}{L_{CS}}\right]\sigma\left(\tau_{0R}, r_i\right)p_a\left(\tau - \tau_{0R}\right),$$

where $g_3(\tau, t, \tau_{0R}, r_i)$ is the time domain echo signal obtained from the orientation scaling Fourier transformation in step 103, $p_a(\cdot)$ and $p_r(\cdot)$ represent the orientation and radial sinc function envelopes, respectively, $\sigma(\cdot)$ is the backscattering coefficient of the target point obtained by way of related art which is not elaborated here; rect[.] is the rectangular pulse expression, is the related art, and is not further elaborated here; $v_R$ is the platform navigating speed of the receiver, $\tau_{0R}$ is the Doppler frequency of the receiver, $L_{CS}$ is the orientation synthetic aperture width, $v_T$ is the platform navigating speed of the transmitter, and $\tau_{0T}$ is the Doppler frequency of the transmitter.

As shown in Fig.2, the disclosure provides an imaging device in an SAB mobile bistatic SAR, which includes: a transformation module 21, a frequency domain filter module 22, a inverse transformation module 23, and a time domain filter module 24, wherein

the transformation module 21 is configured to perform, when the SAB mobile bistatic SAR starts imaging processing, a two-dimensional Fourier transformation on a received echo signal, and send the obtained two-dimensional frequency domain echo signal to the frequency domain filter module 22;

the frequency domain filter module 22 is configured to is configured to correct a radial phase of each range gate in the two-dimensional frequency domain echo signal sent from the transformation module 21 using a radial-variable-slant-range frequency domain filter function, and send the two-dimensional frequency domain echo signal with the corrected radial phase to the inverse transformation module 23;

the inverse transformation module 23 is configured to perform an orientation scaling Fourier transformation on the two-dimensional frequency domain echo signal with the corrected radial phase sent from the frequency domain filter module 22 to obtain a time domain echo signal, and send the time domain echo signal to the time domain filter module 24; and

the time domain filter module 24 is configured to perform each orientation correction on the time domain echo signal sent from the inverse transformation module 23 using an orientation-variable-slant-range time domain filter function to obtain an image.

The frequency domain filter module 22 is specifically configured to perform a consistent radial modulation on the two-dimensional frequency domain echo signal, and then correct the radial phase of each range gate in the modulated two-dimensional frequency domain echo signal using the radial-variable-slant-range frequency domain filter function.

The frequency domain filter module 22 is specifically configured to multiply the two-dimensional frequency domain echo signal with a conjugate function of a two-dimensional frequency domain transmitted signal to eliminate the consistent radial modulation in the two-dimensional frequency domain echo signal, and to distinguish echo energy of different range gates, wherein the conjugate function of the two-dimensional frequency domain transmitted signal is calculated via a related art method not elaborated here.

The frequency domain filter module 22 is specifically configured to take a frequency domain filter function established according to a slant range varying with each range gate as the radial-variable-slant-range frequency domain filter function, which may be expressed as:

$$H_M\left(f_\tau, f, r_i\right) = \exp\left\{j\Phi_M\left(f_\tau, f, r_{0R} = r_i\right)\right\},$$

wherein

$$\Phi_M\left(f_\tau, f, r_{0R}\right) = 2\pi\left[\frac{r_{0R}}{c}\sqrt{\left(f+f_0\right)^2 - \left(\frac{cf_{\tau R}}{v_R}\right)^2} + \frac{r_{0T}}{c}\sqrt{\left(f+f_0\right)^2 - \left(\frac{cf_{\tau T}}{v_T}\right)^2}\right],$$

where $r_i$ represents the shortest slant range of the target located in the ith range gate from the receiver of the SAR, and may be calculated using the following formula:

$$r_{i+1} = r_i + T \bullet \frac{c}{2},$$

where i is an integer greater than or equal to 1, when i=1, $r_i$ is the shortest slant range of the near-ground point target from the receiver of the radar, which is obtained by way of related art not elaborated here; where T is the radial sampling period, c is the signal transmitting speed, $f_{\tau T}$ is the Doppler frequency of the transmitter, $f_{\tau R}$ is the Doppler frequency of the receiver, $v_T$ is the platform navigating speed of the transmitter, $v_R$ is the platform navigating speed of the receiver, $r_{0T}$ is the shortest distance from the point target to the navigation track of the transmitter.

The frequency domain filter module 22 is specifically configured to perform an integration calculation after multiplying the radial-variable-slant-range frequency domain filter function by the range-compressed two-dimensional frequency domain echo signal, and to correct a radial phase in the two-dimensional frequency domain echo signal sent from the transformation module 21.

The time domain filter module 24 is specifically configured to store a time domain filter function established according to a slant range varying with different orientations as the orientation-variable-slant-range time domain filter function, which may be expressed as:

$$\exp\left\{j\Phi_{\mathrm{Re}s}\left(\tau_{0R}, r_i\right)\right\}$$

wherein

$$\Phi_{\mathrm{Re}s}\left(\tau_{0R}, r_i\right) = 2\pi\left[f_{DcT} - k_T\left(f_{DcR} + f_{DcT}\right)\right] \times \left(p_{10} + p_{11}r_i + p_{12}\tau_{0R}\right) + 2\pi\left[f_{DcR} - k_R\left(f_{DcR} + f_{DcT}\right)\right]\tau_{0R}$$

where $\tau_{0R}$ is the Doppler frequency of the receiver, $v_T$ is the platform navigating speed of the transmitter, $v_R$ is the platform navigating speed of the receiver, $p_{10} + p_{11}r_i + p_{12}\tau_{0R}$ is the Doppler frequency of the transmitter, $r_i$ represents the shortest slant range of the target located in the ith range gate from the receiver of the SAR, and may be calculated using the following formula: $r_{i+1} = r_i + T \bullet \frac{c}{2},$ where i is an integer greater than or equal to 1, when i=1, $r_i$ is the shortest slant range of the near-ground point target from the receiver of the radar, which is obtained by way of related art not elaborated here, T is the radial sampling period, c is the signal transmitting speed, $f_{DcT}$ is the Doppler central frequency of the transmitter, $f_{DcR}$ is the Doppler central frequency of the receiver, and $k_T$ and $k_R$ are the Doppler weighting factors of the transmitter and the receiver, expressed as $k_T = \frac{v_T^2}{v_T^2 + v_R^2}$ and $k_R = \frac{v_R^2}{v_T^2 + v_R^2},$ respectively.

The time domain filter module 24 is specifically configured to correct the image using the orientation-variable-slant-range time domain filter function, and calculation is done specifically using the following formula:

$$g_4\left(\tau, t, \tau_{0R}, r_i\right) = g_3\left(\tau, t, \tau_{0R}, r_i\right)\exp\left\{j\Phi_{\mathrm{Re}s}\left(\tau_{0R}, r_i\right)\right\}$$

$$= \rho_r\left(r_{0R} = r_i\right)\sum_{\tau_{0R}}\mathrm{rect}\left[\frac{v_R\tau_{0R}}{L_{CS}}\right]\mathrm{rect}\left[\frac{v_T\tau_{0T}}{L_{CS}}\right]\sigma\left(\tau_{0R}, r_i\right)p_a\left(\tau - \tau_{0R}\right),$$

where $g_3(\tau,t,\tau_{0R},r_i)$ is the time domain echo signal obtained from the orientation scaling Fourier transformation, $p_a(\cdot)$ and $p_r(\cdot)$ represent the orientation and radial sinc function envelopes, respectively, $\sigma(\cdot)$ is the backscattering coefficient of the target point obtained by way of related art which is not elaborated here; rect[.] is the rectangular pulse expression, belongs to the related art, and is not further elaborated here; $v_R$ is the platform navigating speed of the receiver, $\tau_{0R}$ is the Doppler frequency of the receiver, $L_{CS}$ is the orientation synthetic aperture width, $v_T$ is the platform navigating speed of the transmitter, and $\tau_{0T}$ is the Doppler frequency of the transmitter.

The aforementioned device may be installed, as a logic module, in an existing SAB mobile bistatic SAR.

What described are merely preferred embodiments of the disclosure, and are not intended to limit the scope of the disclosure.

**Claims**

1. An imaging method in a Satellite-or-Aircraft-Borne, SAB, mobile bistatic Synthetic Aperture Radar, SAR), comprising:

performing a two-dimensional Fourier transformation on a received echo signal to obtain a two-dimensional frequency domain echo signal (101);
correcting a radial phase of each range gate in the two-dimensional frequency domain echo signal using a radial-variable-slant-range frequency domain filter function (102);
performing an orientation scaling Fourier transformation on the two-dimensional frequency domain echo signal with the corrected radial phase to obtain a time domain echo signal (103); and
using an orientation-variable-slant-range time domain filter function and performing each orientation correction on the time domain echo signal to obtain an image (104),
wherein the correcting a radial phase in the two-dimensional frequency domain echo signal using a radial-variable-slant-range frequency domain filter function comprises: performing a consistent radial modulation on the two-dimensional frequency domain echo signal, and then correcting the radial phase of each range gate in the modulated two-dimensional frequency domain echo signal using the radial-variable-slant-range frequency domain filter function,
wherein the performing each orientation correction on the time domain echo signal to obtain an image comprises: multiplying the orientation-variable-slant-range time domain filter function with the time domain echo signal to obtain a corrected image,
wherein the orientation-variable-slant-range time domain filter function is a time domain filter function established according to a slant range varying with different orientations.

2. The imaging method according to claim 1, wherein the performing a consistent radial modulation on the two-dimensional frequency domain echo signal comprises: multiplying the two-dimensional frequency domain echo signal with a conjugate function of a two-dimensional frequency domain transmitted signal to obtain the two-dimensional frequency domain echo signal after the consistent radial modulation.

3. The imaging method according to claim 1 or 2, wherein the radial-variable-slant-range frequency domain filter function is a frequency domain filter function established according to a slant range varying with each range gate.

4. An imaging device in a Satellite-or-Aircraft-Borne, SAB, mobile bistatic Synthetic Aperture Radar, SAR), comprising: a transformation module, a frequency domain filter module, an inverse transformation module, and a time domain filter module, wherein
the transformation module (21) is configured to perform a two-dimensional Fourier transformation on a received echo signal to obtain a two-dimensional frequency domain echo signal, perform the two-dimensional Fourier transformation on the echo signal, and send the obtained two-dimensional frequency domain echo signal to the frequency domain filter module;
the frequency domain filter module (22) is configured to correct a radial phase of each range gate in the two-dimensional frequency domain echo signal sent from the transformation module using a radial-variable-slant-range frequency domain filter function, and send the two-dimensional frequency domain echo signal with the corrected radial phase to the inverse transformation module;
the inverse transformation module (23) is configured to perform an orientation scaling Fourier transformation on the two-dimensional frequency domain echo signal with the corrected radial phase sent from the frequency domain filter module to obtain a time domain echo signal, and send the time domain echo signal to the time domain filter module; and
the time domain filter module (24) is configured to perform each orientation correction on the time domain echo signal sent from the inverse transformation module using an orientation-variable-slant-range time domain filter function to obtain an image, wherein the frequency domain filter module is configured to perform a consistent radial modulation on the two-dimensional frequency domain echo signal, and then correct the radial phase of each range gate in the modulated two-dimensional frequency domain echo signal using the radial-variable-slant-range frequency domain filter function,

wherein the time domain filter module is configured to multiply the orientation-variable-slant-range time domain filter function with the time domain echo signal to obtain a corrected image,

wherein the time domain filter module is configured to take a time domain filter function established according to a slant range varying with different orientations as the orientation-variable-slant-range time domain filter function.

5.  The imaging device according to claim 4, wherein the frequency domain filter module is configured to multiply the two-dimensional frequency domain echo signal with a conjugate function of a two-dimensional frequency domain transmitted signal to obtain the two-dimensional frequency domain echo signal after the consistent radial modulation.

6.  The imaging device according to claim 5, wherein the frequency domain filter module is configured to take a frequency domain filter function established according to a slant range varying with each range gate as the radial-variable-slant-range frequency domain filter function.


**Patentansprüche**

1.  Bildgebungsverfahren in einem satelliten- oder luftfahrzeuggetragenen (Satellite-or-Aircraft-Borne, SAB) mobilen bistatischen Radar mit synthetischer Apertur (Synthetic Aperture Radar, SAR), umfassend:

    Ausführen einer zweidimensionalen Fourier-Transformation an einem empfangenen Echosignal, um ein Echosignal (101) im zweidimensionalen Frequenzbereich zu erhalten;
    Korrigieren einer radialen Phase jedes Entfernungstors (Range Gate) in dem Echosignal im zweidimensionalen Frequenzbereich unter Nutzung einer Radial-Variable-Slant-Range-Frequenzbereichsfilterfunktion (102);
    Ausführen einer ausrichtungsskalierenden Fourier-Transformation an dem Echosignal im zweidimensionalen Frequenzbereich mit der korrigierten radialen Phase, um ein Echosignal (103) im Zeitbereich zu erhalten; und
    Nutzen einer Orientation-Variable-Slant-Range-Zeitbereichsfilterfunktion und Ausführen jeder Ausrichtungskorrektur an dem Echosignal im Zeitbereich, um ein Bild (104) zu erhalten,
    wobei das Korrigieren einer radialen Phase in dem Echosignal im zweidimensionalen Frequenzbereich unter Nutzung einer Radial-Variable-Slant-Range-Frequenzbereichsfilterfunktion Folgendes umfasst: Ausführen einer konsistenten radialen Modulation an dem Echosignal im zweidimensionalen Frequenzbereich und anschließend Korrigieren der radialen Phase jedes Entfernungstors in dem modulierten Echosignal im zweidimensionalen Frequenzbereich unter Nutzung der Radial-Variable-Slant-Range-Frequenzbereichsfilterfunktion,
    wobei das Ausführen jeder Ausrichtungskorrektur an dem Echosignal im Zeitbereich zum Erhalten eines Bilds Folgendes umfasst: Multiplizieren der Orientation-Variable-Slant-Range-Zeitbereichsfilterfunktion mit dem Echosignal im Zeitbereich, um ein korrigiertes Bild zu erhalten,
    wobei die Orientation-Variable-Slant-Range-Zeitbereichsfilterfunktion eine Zeitbereichsfilterfunktion ist, die gemäß einer mit verschiedenen Ausrichtungen variierenden Schrägentfernung (Slant Range) erstellt wird.

2.  Bildgebungsverfahren nach Anspruch 1, wobei das Ausführen einer konsistenten radialen Modulation an dem Echosignal im zweidimensionalen Frequenzbereich Folgendes umfasst: Multiplizieren des Echosignals im zweidimensionalen Frequenzbereich mit einer konjugierten Funktion eines übertragenen Signals im zweidimensionalen Frequenzbereich, um nach der konsistenten radialen Modulation das Echosignal im zweidimensionalen Frequenzbereich zu erhalten.

3.  Bildgebungsverfahren nach Anspruch 1 oder 2, wobei die Radial-Variable-Slant-Range-Frequenzbereichsfilterfunktion eine Frequenzbereichsfilterfunktion ist, die gemäß einer mit jedem Entfernungstor variierenden Schrägentfernung erstellt wird.

4.  Bildgebungsvorrichtung in einem satelliten- oder luftfahrzeuggetragenen (Satellite-or-Aircraft-Borne, SAB) mobilen bistatischen Radar mit synthetischer Apertur (Synthetic Aperture Radar, SAR), umfassend: ein Transformationsmodul, ein Frequenzbereichsfiltermodul, ein Umkehrtransformationsmodul und ein Zeitbereichsfiltermodul, wobei das Transformationsmodul (21) gestaltet ist, eine zweidimensionale FourierTransformation an einem empfangenen Echosignal auszuführen, um ein Echosignal im zweidimensionalen Frequenzbereich zu erhalten, die zweidimensionale FourierTransformation an dem Echosignal auszuführen und das erhaltene Echosignal im zweidimensionalen Frequenzbereich an das Frequenzbereichsfiltermodul zu senden;

das Frequenzbereichsfiltermodul (22) gestaltet ist, eine radiale Phase jedes Entfernungstors in dem vom Transformationsmodul gesendeten Echosignal im zweidimensionalen Frequenzbereich unter Nutzung einer Radial-Variable-Slant-Range-Frequenzbereichsfilterfunktion zu korrigieren und das Echosignal im zweidimensionalen Frequenzbereich mit der korrigierten radialen Phase an das Umkehrtransformationsmodul zu senden;

das Umkehrtransformationsmodul (23) gestaltet ist, eine ausrichtungsskalierende Fourier-Transformation an dem vom Frequenzbereichsfiltermodul gesendeten Echosignal im zweidimensionalen Frequenzbereich mit der korrigierten radialen Phase auszuführen, um ein Echosignal im Zeitbereich zu erhalten, und das Echosignal im Zeitbereich an das Zeitbereichsfiltermodul zu senden; und

das Zeitbereichsfiltermodul (24) gestaltet ist, jede Ausrichtungskorrektur an dem vom Umkehrtransformationsmodul gesendeten Echosignal im Zeitbereich unter Nutzung einer Orientation-Variable-Slant-Range-Zeitbereichsfilterfunktion auszuführen, um ein Bild zu erhalten, wobei das Frequenzbereichsfiltermodul gestaltet ist, eine konsistente radiale Modulation an dem Echosignal im zweidimensionalen Frequenzbereich auszuführen und anschließend die radiale Phase jedes Entfernungstors in dem modulierten Echosignal im zweidimensionalen Frequenzbereich unter Nutzung der Radial-Variable-Slant-Range-Frequenzbereichsfilterfunktion zu korrigieren,

wobei das Zeitbereichsfiltermodul gestaltet ist, die Orientation-Variable-Slant-Range-Zeitbereichsfilterfunktion mit dem Echosignal im Zeitbereich zu multiplizieren, um ein korrigiertes Bild zu erhalten,

wobei das Zeitbereichsfiltermodul gestaltet ist, eine Zeitbereichsfilterfunktion, die gemäß einer mit verschiedenen Ausrichtungen variierenden Schrägentfernung erstellt wird, als die Orientation-Variable-Slant-Range-Zeitbereichsfilterfunktion zu nehmen.

5.   Bildgebungsvorrichtung nach Anspruch 4, wobei das Frequenzbereichsfiltermodul gestaltet ist, das Echosignal im zweidimensionalen Frequenzbereich mit einer konjugierten Funktion eines übertragenen Signals im zweidimensionalen Frequenzbereich zu multiplizieren, um nach der konsistenten radialen Modulation das Echosignal im zweidimensionalen Frequenzbereich zu erhalten.

6.   Bildgebungsvorrichtung nach Anspruch 5, wobei das Frequenzbereichsfiltermodul gestaltet ist, eine Frequenzbereichsfilterfunktion, die gemäß einer mit jedem Entfernungstor variierenden Schrägentfernung erstellt wird, als die Radial-Variable-Slant-Range-Frequenzbereichsfilterfunktion zu nehmen.

## Revendications

1.   Procédé d'imagerie radar à synthèse d'ouverture (SAR) bi-statique mobile embarqué dans un satellite ou un aéronef (SAB), comprenant :

l'exécution d'une transformation de Fourier à deux dimensions sur un signal d'écho reçu afin d'obtenir un signal d'écho de domaine de fréquence à deux dimensions (101) ;

la correction d'une phase radiale de chaque fenêtre de distance dans le signal d'écho de domaine de fréquence à deux dimensions à l'aide d'une fonction de filtre de domaine de fréquence de distance oblique variable radialement (102) ;

l'exécution d'une transformation de Fourier de mise à l'échelle d'orientation sur le signal d'écho de domaine de fréquence à deux dimensions à phase radiale corrigée afin d'obtenir un signal d'écho de domaine de temps (103) ; et

l'application d'une fonction de filtre de domaine de temps oblique variable radialement et l'exécution de chaque correction d'orientation sur le signal d'écho de domaine de temps afin d'obtenir une image (104),

où la correction d'une phase radiale dans le signal d'écho de domaine de fréquence à deux dimensions à l'aide d'une fonction de filtre de domaine de fréquence de distance oblique variable radialement comprend : l'exécution d'une modulation radiale consistante sur le signal d'écho de domaine de fréquence à deux dimensions, suivie de la correction de la phase radiale de chaque fenêtre de distance dans le signal d'écho de domaine de fréquence à deux dimensions modulé à l'aide de la fonction de filtre de domaine de fréquence de distance oblique variable radialement,

où l'exécution de chaque correction d'orientation sur le signal d'écho de domaine de temps afin d'obtenir une image comprend : la multiplication de la fonction de filtre de domaine de temps oblique variable radialement par le signal d'écho de domaine de temps afin d'obtenir une image corrigée,

où la fonction de filtre de domaine de temps oblique variable radialement est une fonction de filtre de domaine de temps créée en fonction d'une distance oblique variant avec des orientations différentes.

**2.** Procédé d'imagerie selon la revendication 1, où l'exécution d'une modulation radiale consistante sur le signal d'écho de domaine de fréquence à deux dimensions comprend : la multiplication du signal d'écho de domaine de fréquence à deux dimensions par une fonction conjuguée d'un signal transmis de domaine de fréquence à deux dimensions afin d'obtenir le signal d'écho de domaine de fréquence à deux dimensions après la modulation radiale consistante.

**3.** Procédé d'imagerie selon la revendication 1 ou la revendication 2, où la fonction de filtre de domaine de fréquence de distance oblique variable radialement est une fonction de filtre de domaine de fréquence créée en fonction d'une distance oblique variant avec chaque fenêtre de distance.

**4.** Dispositif d'imagerie radar à synthèse d'ouverture (SAR) bi-statique mobile embarqué dans un satellite ou un aéronef (SAB), comprenant : un module de transformation, un module de filtre de domaine de fréquence, un module de transformation inverse et un module de filtre de domaine de temps, où
le module de transformation (21) est prévu pour exécuter une transformation de Fourier à deux dimensions sur un signal d'écho reçu afin d'obtenir un signal d'écho de domaine de fréquence à deux dimensions, exécuter la transformation de Fourier à deux dimensions sur le signal d'écho, et émettre le signal d'écho de domaine de fréquence à deux dimensions obtenu vers le module de filtre de domaine de fréquence ;
le module de filtre de domaine de fréquence (22) est prévu pour corriger une phase radiale de chaque fenêtre de distance dans le signal d'écho de domaine de fréquence à deux dimensions émis par le module de transformation à l'aide d'une fonction de filtre de domaine de fréquence de distance oblique variable radialement, et émettre le signal d'écho de domaine de fréquence à deux dimensions à phase radiale corrigée vers le module de transformation inverse ;
le module de transformation inverse (23) est prévu pour exécuter une transformation de Fourier de mise à l'échelle d'orientation sur le signal d'écho de domaine de fréquence à deux dimensions à phase radiale corrigée émis par le module de filtre de domaine de fréquence afin d'obtenir un signal d'écho de domaine de temps, et émettre le signal d'écho de domaine de temps vers le module de filtre de domaine de temps ; et
le module de filtre de domaine de temps (24) est prévu pour exécuter chaque correction d'orientation sur le signal d'écho de domaine de temps émis par le module de transformation inverse à l'aide d'une fonction de filtre de domaine de temps oblique variable radialement afin d'obtenir une image, où le module de filtre de domaine de fréquence est prévu pour exécuter une modulation radiale consistante sur le signal d'écho de domaine de fréquence à deux dimensions, suivie de la correction de la phase radiale de chaque fenêtre de distance dans le signal d'écho de domaine de fréquence à deux dimensions modulé à l'aide de la fonction de filtre de domaine de fréquence de distance oblique variable radialement,
où le module de filtre de domaine de temps est prévu pour multiplier la fonction de filtre de domaine de temps oblique variable radialement par le signal d'écho de domaine de temps afin d'obtenir une image corrigée,
où le module de filtre de domaine de temps est prévu pour assumer une fonction de filtre de domaine de temps créée en fonction d'une distance oblique variant avec des orientations différentes en tant que fonction de filtre de domaine de temps oblique variable radialement.

**5.** Dispositif d'imagerie selon la revendication 4, où le module de filtre de domaine de fréquence est prévu pour multiplier le signal d'écho de domaine de fréquence à deux dimensions par une fonction conjuguée d'un signal transmis de domaine de fréquence à deux dimensions afin d'obtenir le signal d'écho de domaine de fréquence à deux dimensions après la modulation radiale consistante.

**6.** Dispositif d'imagerie selon la revendication 5, où le module de filtre de domaine de fréquence est prévu pour assumer une fonction de filtre de domaine de fréquence créée en fonction d'une distance oblique variant avec chaque fenêtre de distance en tant que fonction de filtre de domaine de fréquence de distance oblique variable radialement.

Fig. 1

/ 101

```
when an SAB mobile bistatic SAR starts imaging
processing, performing a two-dimensional Fourier
transformation on a received echo signal to obtain a two-
dimensional frequency domain echo signal
```

/ 102

```
correcting a radial phase of each range gate in the two-
dimensional frequency domain echo signal using a radial-
variable-slant-range frequency domain filter function
```

/ 103

```
performing an orientation scaling Fourier transformation on
the two-dimensional frequency domain echo signal with the
corrected radial phase to obtain a time domain echo signal
```

/ 104

```
using an orientation-variable-slant-range time domain filter
function and performing each orientation correction on the
time domain echo signal to obtain an image
```

Fig. 2

/ 21                    / 22                    / 23                    / 24

| transformation module | → | frequency domain filter module | → | inverse transformation module | → | time domain filter module |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5675550 A

**Non-patent literature cited in the description**

- **JOACHIM ENDER et al.** *New aspects of bistatic SAR: processing and experiments*
- **CHENG HU et al.** *Forward-Looking Bistatic SAR Range Migration Algorithm*
- **OTMAR LOFFELD et al.** *Models and Useful Relations for Bistatic SAR Processing*